# EUROPEAN PATENT APPLICATION

(11) **EP 2 348 797 A1**
(43) Date of publication of application: **27.07.2011**
(21) Application number: 09161856.1
(22) Date of filing: 03.06.2009
(51) Int. Cl.: H05B 41/295, H05B 41/38

(54) **A method of controlling a fluorescent lamp and a control system therefor**

(30) Priority: 31.12.2008 EP 08106043
(71) Applicant: NXP B.V., 5656 AG Eindhoven (NL)
(72) Inventor: Deurenberg, Peter, Redhill, Surrey RH1 1DL (GB); van Elk, Henricus, Redhill, Surrey RH1 1DL (GB); Jansen, Dennis, Redhill, Surrey RH1 1DL (GB); Bongers, Joost, Redhill, Surrey RH1 1DL (GB); Kleinpenning, Jeroen, Redhill, Surrey RH1 1DL (GB)
(74) Representative: Hardingham, Christopher Mark

(57) **Abstract**

A method of controlling a fluorescent lamp is disclosed, which method is capable of implementing, adjustment or omitting a high-power start-up mode. The control is dependent on a sensor, which senses a temperature indicative of the temperature of the lamp, which sensor may preferably be integral with a controller and implemented in an integrated circuit. The adjustment may comprise changes to the current during a high-power start-up mode, or changes to duration of the mode. A single adjustment of multiple adjustments may be made.

A control system operable according to such a method is also disclosed.

## Description

### Field of the Invention

This invention relates to control systems for compact fluorescent lamps, and to methods for controlling compact fluorescent lamps.

### Background of the Invention

Fluorescent lamps, in the form of relatively long general lighting tubes, have been widely used for lighting applications since the 1930s. However, their size and properties - in particular the characteristic colour, or colour temperature - have resulted in their not being widely used in the domestic environment.

Fluorescent lamps rely on the emission of electrons from an electrode, to provide the electrons to ionise the gas within the tube. Since electron emission is much more efficient from a hot electrode, fluorescent lamps often include a filament as the electrode. They thus require two terminals or pins to the electrode, in order to pass a current through the filament to heat it, in addition to the electron emission current. Due in part to their relatively high operational efficiency, fluorescent lamps have been developed for use in a wide range of supplementary applications. Many of these supplementary applications require the lamp to be small relative to the conventional and well-known fluorescence general lighting tube. In part to satisfy the requirement for a small device, cold cathode fluorescent lamps (CCFL) have been developed. CCFL lamps are characterised in that they only have a single terminal pin to the emission electrode. The electrode does not now consist of a filament, but a simple bar: in order to achieve a high emission temperature and thus improve efficiency, the electrode may be arranged to act in a self-heating mode. CCFL lamps tend to be used in applications such as backlighting for LCD displays.

Another development of fluorescent lamp technology has been directed towards compact fluorescent lamps (CFL). Compact fluorescent lamps often have integrated controller or ballast, and so an alternative terminology "integrated compact fluorescent lamp", (CFL-i) is also used. Due to the world-wide increasing focus on energy consumption, more and more attention is paid to integrated Compact Fluorescent Lamps. Hereinafter in this document, the term CFL will be used inclusively to include CFL-i.

Such lamps have been developed with the general aim of replacing conventional incandescent bulbs (Edison lamp). CFL lamps have an inherent efficiency advantage compared with incandescent light sources, being typically around five times more efficient. However, although these lamps have been available for over twenty years, they have not yet achieved particularly high market penetration. Partly this can be attributed to sub-optimal marketing, partly due to their higher price but also partly due to their properties.

Due to the worldwide focus on energy consumption, together with political moves in some countries towards banning traditional incandescent light-bulbs, it is anticipated that commercial interest in and market volumes for CFL lamps will increase. Furthermore, some of the technical barriers against widespread uptake of CFL lamps have been solved in recent years. For example, although the original CFL lamps were very large, modern CFL lamps can either match or almost match the regular incandescent light bulbs. A further example of the technological developments which will increase the uptake of CFL lamps is the ability to dim the lamps.

Another barrier to uptake, which has only partially been resolved to date, is that of the slow light increase which is observed when turning on a cold lamp. The problem may be addressed to some extent by temporarily increasing the lamp current, in a "quick start" mode. The resulting higher power dissipation heats the lamp to its final nominal operating temperature faster than would otherwise be the case. After a predetermined period, when the lamp approaches its nominal operating temperature, the quick-start mode is terminated, and the current returns to its nominal operating value.

Although quick-start addresses the problem of slow light level increase, it does entail some disadvantages: if the lamp is not cold when initially switched on, because it has been recently used, quick starting would be unnecessary, and in fact would damage the lamp such that its lifetime is reduced, since the lifetime of CFL lamps can be reduced by running them over-temperature. In such circumstances, also, the circuit and burner are both prone to overheating and damage.

There thus remains an ongoing requirement to provide a controller for a fluorescent lamp and a method of controlling a fluorescent, which do not suffer to the same extent from the problem of overheating as a result of quick start.

### Summary of the invention

It is an object of the present invention to provide a method of controlling a fluorescent lamp which mitigates against the risk of overheating the lamp.

According to a first aspect of the invention there is provided a method of controlling a fluorescent lamp operable in a start-up mode and a normal operating mode, the start-up mode having a start-up power and the normal operating mode having a normal operating power such that the start-up power is larger that the normal operating power, comprising sensing an indicative temperature which is indicative of the temperature of the compact fluorescent lamp by means of a sensor, and controlling the start-up mode in dependence on the indicative temperature by means of a controller. By the sensing a temperature indicative of the temperature of the lamp, the lamp's control system can method take into account aspects of the previous history of the lamp, and implement, adapt or omit a quick start mode or a preheat mode, or both, accordingly.

In embodiments, the start-up mode comprises a quick-start mode such that the start-up power is larger than the normal operating power. Thus the invention may be used to control a quick-start mode, in which the power to the lamp is boosted. Beneficially, this may provide relatively increased luminous output whilst the lamp is cold, since under equivalent conditions a cold lamp produces a lower luminous output than a lamp at normal operating temperature,.

Alternatively or in addition but without limitation, the or another start-up mode may comprise a pre-heat mode in which the compact fluorescent lamp is not ignited. Thus the method according to embodiments of the invention may be effective to reduce the pre-heat period, during which the filaments of the lamp are heated prior to ignition of the lamp. Since at this stage the lamp is not ignited, all or almost all of the power directed to the lamp is effective in heating the filaments. As a result of the reduced preheat period, the lamp emits light sooner, without a negative effect on lamp life.

In a preferred embodiment, the sensor is integral with the controller. This provides for a particularly convenient method of manufacturing a control system operable according to the invention.

According to a first embodiment, the indicative temperature is sensed before the compact fluorescent lamp enters the start-up mode, and the step of controlling the start-up mode comprises bypassing the start-up mode if the indicative temperature exceeds a first threshold temperature. Thus, if the control system detects the lamp is too warm, it can, advantageously to the life of the system, omit the start-up mode completely. The life of the lamp and other components in the housing can thereby be improved.

Further, the step of controlling the start-up mode may beneficially comprise terminating the start-up mode if the indicative temperature exceeds a stop threshold temperature which is higher than the first threshold temperature. This can provide for hardware protection against over-temperature.

According to a further embodiment the indicative temperature is sensed whilst the compact fluorescent lamp is in the start-up mode, and the step of controlling the start-up mode comprises terminating the start-up mode if the indicative temperature exceeds a first threshold temperature. By this means the duration during which the lamp operate in start-up mode can be limited, in order to improve the lifetime of the lamp and components by minimising their overstress.

According to embodiments of the invention the step of controlling the start-up mode further comprises adjusting the start-up power in dependence on the indicative temperature if the indicative temperature does not exceed the first threshold temperature. Without limitation, the power may be controlled by adjusting the current through the lamp, or setting the frequency of operation since in general a lower frequency operation results in higher power. Alternative means of controlling the power such as controlling the duty cycle of the power switches or controlling the supply or input voltage will be immediately apparent to the skilled user and are within the scope of the invention.

Preferably, the step of controlling the start-up power comprises setting the start-up power to a first power level if the indicative temperature does not exceed a second threshold temperature and setting the start-up power to a second current level if the indicative temperature exceeds the second threshold temperature and does not exceed a third. Thus, the control system according to embodiments can beneficially adjust the start-up power in order to minimise the degree of overrunning or over-stressing the lamp or components, such that they the need not operate far outside of their normal operating conditions operating envelope.

In preferred embodiments, the start-up mode is terminated if the lamp is in the start-up mode at the end of a predetermined maximum start-up duration. In such embodiments it is prevented that the lamp remains in a high power mode for an excessive duration.

Methods according to the invention can control fluorescent lamps, and in particular CFL lamps, whether or not they are integrated CFL, that is, whether or not they are CFL-i.

In embodiments, the step of controlling the start-up mode comprises adjusting the duration of the start-up mode in dependence on the indicative temperature. Thus, in a lamp which is designed to include a pre-heat phase, the pre-heat phase can be reduced or eliminated if not required, such as when a lamp which is designed for interior or exterior use is used in a warm interior environment.

According to another aspect of the invention there is provided a control system for a fluorescent lamp operable in a start-up mode and a normal operating mode, the start-up mode having a start-up power and the normal operating mode having a normal operating power such that the start-up current is larger that the normal operating current, comprising a sensor for sensing an indicative temperature in dependence on the temperature of the compact fluorescent lamp and a controller adapted to control the start-up mode in dependence on the indicative temperature. Preferably the sensor is integral with the controller. This provides for particularly convenient design and manufacture of the controller itself and the lamp, and does not require additional volume to hold an external sensor

According to embodiments of the invention the controller comprises a boost connection, and is configured to receive information determinative of both the start-up power and a duration of the start-up mode via the boost connection. Preferably, the controller is configured such that, in use, the information is provided by means of a network of one or more resistors and one or more capacitors connected to the boost connection. Thus, the start-up power and duration may be pre-determined, according to the type of lamp with which the controller is used.

Preferably, the network comprises a resistor for determining the start-up power and a capacitor such that the duration of the start-up mode is determined by means of a time constant associated with the resistor and the capacitor. Thus a single pin may be used for both the duration and power of the start-up mode, which provides for a particularly simple implementation and frees up other pins of the controller for additional functionality where such is required.

According to embodiments of the invention, the control system is configured to sense the indicative temperature before the fluorescent lamp enters the start-up mode and the controller is configured to bypass the start-up mode if the indicative temperature exceeds a first threshold temperature. Unnecessary use of excess power is thereby prevented. Further, the control system may be configured to terminate the start-up mode if the indicative temperature exceeds a second threshold temperature which is higher than the first threshold temperature, which may provide hardware protection against over-temperature of the lamp.

According to embodiments of the invention, the control system is configured to sense the indicative temperature whilst the fluorescent lamp is in the start-up mode and the controller is configured to terminate the start-up mode if the indicative temperature exceeds a first threshold temperature. Unnecessary lifetime reduction and use of power is thereby limited.

According to embodiments of the invention, the controller is further configured to control the start-up power in dependence on the indicative temperature if the indicative temperature does not exceed the first threshold temperature. The power may be controlled, without limitation, by means for example of the lamp current or the operating frequency. Preferably the controller is further configured to set the start-up power to a first power level if the indicative temperature does not exceed a second threshold temperature and to set the start-up power to a second power level if the indicative temperature exceeds the second threshold temperature and does not exceed a third. The lifetime of the lamp and components is therefore not unnecessarily reduced.

According to another aspect of the invention, there is provided an integrated circuit comprising a control system as described above. Such integrated circuit beneficially provides additional control over the start-up operation of a fluorescent lamp such as a CFL lamp, compared with those available in the prior art.

These and other aspects of the invention will be apparent from, and elucidated with reference to, the embodiments described hereinafter.

### Brief description of Drawings

Embodiments of the invention will be described, by way of example only, with reference to the drawings, in which
Figure 1 shows a side view of a CFL lamp;
Figure 2 is a schematic of some of the components of the CFL lamp;
Figure 3 is a general state machine for the operation of a CFL lamp;
Figure 4a is a view of part of the state machine of figure 3, modified according to a first embodiment of the present invention;
Figure 4b is a view of part of the state machine of figure 3, modified according to a first embodiment of the present invention;
Figure 5 is a view of the same part, modified according to a third embodiment of the present invention;
Figure 6a is a view of the same part, modified according to a fourth embodiment of the invention;
Figure 6b is a view of the same part, modified according to a fifth embodiment of the invention;
Figure 7, is a view of the same part, modified according to a sixth embodiment of the invention;
Figure 8 is a view of a different part of the state machine of figure 3, modified according to seventh embodiment of the present invention; and
Figure 9 is a schematic showing a controller with a single-pin connection for determination of the boost level and duration.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar feature in modified and different embodiments

### Detailed description of embodiments

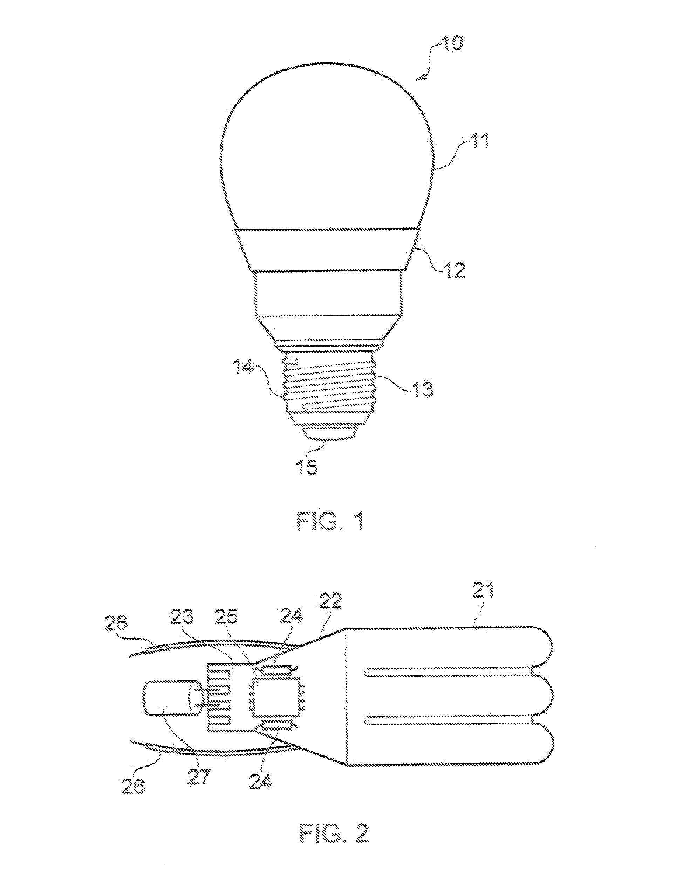

In figure 1 is illustrated an example of a compact fluorescent lamp (CFL) which is compatible with, and has almost exactly the same form as, a conventional screw-cap Incandescent lightbulb. An outer glass bowl 11 is supported in a sleeve 12, which lies above the screw cap 13, which provides for electrical connection directly from a mains supply to the lamp by means of thread 14 and tip 15.

Major components within such a CFL luminaire are shown in figure 2. Within the outer glass bowl 11 lies a coiled or helical glass tube 21. Helical glass tube 21 is mounted on a sleeve 22, which is also used to mount one or more circuit boards 23. Only a single circuit board 23 is shown in the figure, however in alternative designs, a further circuit board, lying perpendicular to the plane of figure, is also supported by the sleeve 22. Mounted on the circuit board 23, which may be a printed circuit board (PCB), are one or more discrete components 24, together with one or more integrated circuits 25 required to provide effective control for the CFL. Connection to the thread 14 and tip 15 of the screw 13, are provided by means of leads 26.

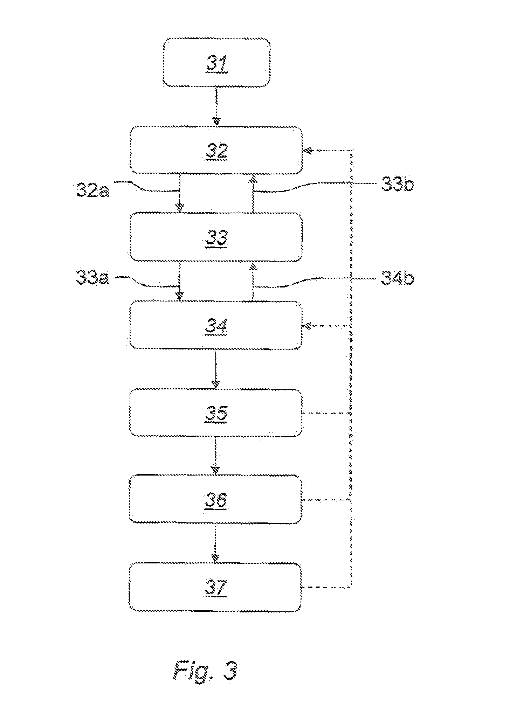

One means of operating a CFL as described above is illustrated in the figure 3. Figure 3 shows a state machine of the general operation of a CFL lamp, including preheat, ignition, and Quick start states, as well as nominal operating state (which may also be referred to as a "burn" state).

The state machine operates by means of a state variable VDD, which corresponds to the supply voltage of the chip. Initially, in state 31, VDD is zero. The controller thence enters RESET state 32. If VDD>VDDreset, the state machine moves (via 32a) into START-UP state 33. Thence, if VDD>VDDstart, the state machine moves (via 33a) to PREHEAT state 34. In the PREHEAT state, the filaments are preheated to enable easier ignition and greatly improve the lifetime of the lamp. In this state, all the power converted by the driver goes to the filaments. Typically, this is significantly less than the lamp power during normal operation, so the current may be in the range of 300-400mA. Usually this is accomplished by sweeping down the frequency from the startup frequency (in 100kHz range) down to a value such as 70kHz. Normally, either the preheat current is controlled or the preheat frequency is controlled.

After a predetermined preheating time, the state machine moves to IGNITION state 35. Whilst in IGNITION state 35 the operating frequency is decreased, creating a high voltage across the lamp to enable it to ignite and turn on. The high voltage is created through the resonant LC-circuit by approaching its resonant frequency. The ignition voltage is usually in the order of 600V, but strongly depends on the lamp diameter; typically thinner tubes require a higher voltage. The currents in the resonant circuit can reach up to perhaps 3A. At the resonant frequency, the instantaneous power converted by the circuit will be very high, typically greater than 100W.

From the IGNITION state 35, the CFL moves to QUICK START state 36. At the conclusion of the Quick Start time, which will be described in more detail hereinafter with reference to embodiments of the present invention, the CFL moves to a BURN state 37. Whilst in any of the ignition state 35, QUICK START state 36, or the BURN state 37, the machine tests if sufficient supply voltage (VDD) is still available, and if not, returns to the RESET state 32 or PRE-HEAT state 34 as appropriate. In burn mode, the lamp operates at a frequency of around 40-45 kHz. Depending on the circuit this is a fixed frequency, or it is variable, where the lamp current is controlled. The latter is much more suitable for dimming, because it can handle the inherent lamp instabilities at deep dimming levels. Lamp currents of course depend on the lamp power, but are usually in the 1 00-200mA range for regular CFL-i , although there are exceptions where it can be greater than 300mA

Note that not all CFL lamps initiate according the above sequence, and in particular some lamps operate without a separate PRE-HEAT state. For example, the frequency can be merely sweeped down, from approximately 100kHz, through an IGNITION state and direct to the normal operating frequency. The invention is equally applicable to such initiation methods.

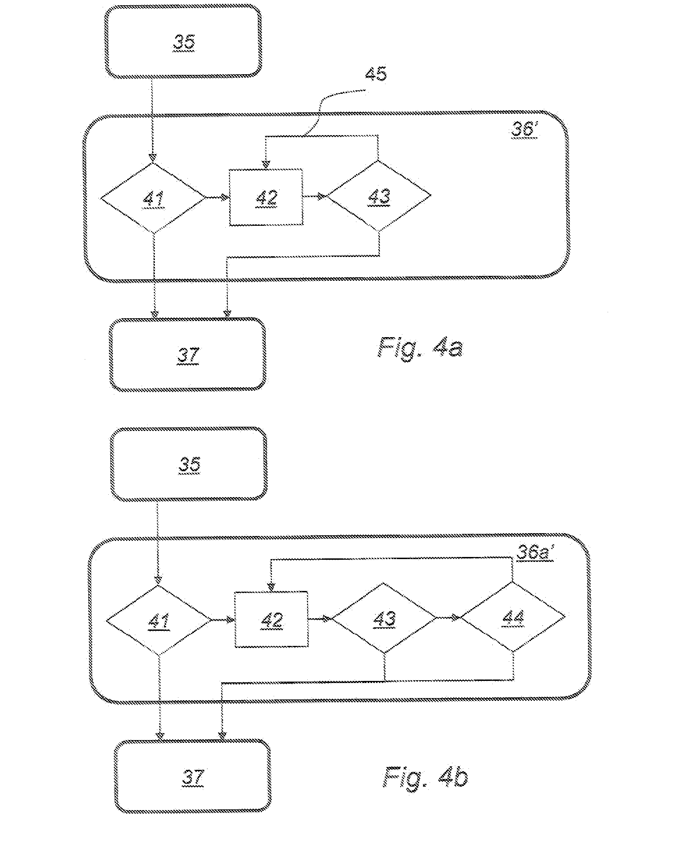

A modification of the state machine of figure 3, which corresponds to a method according to a first embodiment of the present invention, is shown in figure 4a. Figure 4a shows in more detail the operation in the state machine, when the system is in, or is about to enter, the QUICK START state. Upon entering the modified QUICK START state 36', or just prior to entering this state from the IGNITION state 35, the system checks for the condition Tic < QSth, at 41. Here, Tic is the temperature of the integrated circuit embodying the state machine, and QSth corresponds to a predetermined threshold temperature. If the condition is met, then the control operates to drive the lamp with a quick-start power Pqs, at 42, that is Pqs>Pnom. The quick-start power Pqs is higher than the nominal operating power Pnom. This is effected by means of applying a higher current to the lamp. The higher power is applied to the lamp for a pre-determined period, by repeated testing for the condition "end quick start time" at 43. All the while the condition is not met, the control returns to 42 with Pqs (>Pnom) via link 45, as for the unmodified state machine according to that shown in Figure 3; once the condition "end quick start time" is met, then the CFL moves to the BURN state 37. If, however, the condition Tic < QSth is not met at test 41, that is to say, if Tic is equal to or higher than the threshold temperature, then the state machine bypasses the modified QUICK-START state 36', and moves straight to the BURN state 37.

Tic corresponds, in this case, to a temperature of a sensor which is integral with the controller - that is to say, the sensor forms part of the integrated circuit 25. It could equally be realized, in other embodiments, with external components, such as, without limitation, by using a negative temperature coefficient (NTC) or positive temperature coefficient (PTC) sensor - although if the temperature sensor is outside the integrated circuit, either an additional pin is needed or some more components, which requires volume and thus, due to volume restrictions, these embodiments are less preferred. The advantage of an external temperature sensor, that it can be placed closer to the burner, is not significant when considered against the additional volume requirements and production disadvantages such as the likely need for wiring to bring it close to the burner.

Furthermore, although Tic measures the temperature of the integrated circuit (IC), it will readily apparent that this is being used as a proxy for the temperature of the burner itself. In order to meet the form and volume requirements of a CFL, the integrated circuit is necessarily located close to the burner, as can be seen from figure 1 and figure 2. The temperature of the IC is thus a good approximation to the temperature of the burner itself; should it be necessary in a particular application, an offset may be applied to the value of QSth in order to take account of the difference.

A second embodiment of the present invention is illustrated in Figure 4b. The embodiment depicted in figure 4b is generally similar to that shown in figure 4a; however in this embodiment, the temperature of the IC is checked not only on entry 41 into Quick start state, denoted in this case by 36a', but is rechecked during the period of the lamp is being driven by the higher Quick start current. Thus, compared with the state diagram of the embodiment depicted in figure 4a, the embodiment depicted in figure 4b, as well as repeatedly testing for the condition "end quick start time" at 43, repeatedly tests an additional condition "Tic < QSth_stop", shown at test 44. If this additional condition is met, the quick start is ended and the state machine moves to the BURN state. This additional test during start-up is useful to prevent overstressing the components, and to protect against hardware failure due to over-temperature, and as a result it is preferred that the second threshold (QSth_stop) used in this additional test is higher than the threshold level (QSth) used in test 41.

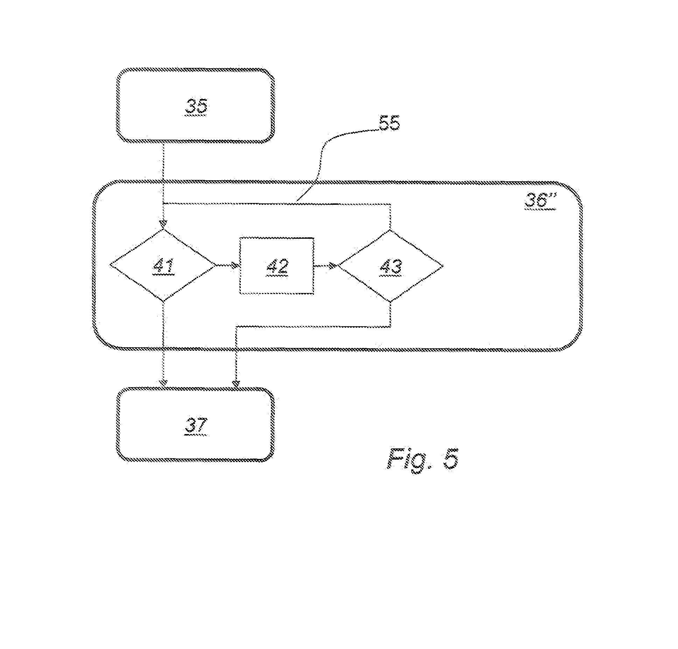

A third embodiment of the present invention is illustrated in figure 5. The embodiment depicted in figure 5 is generally similar to that shown in figure 4a; however in this embodiment, the temperature of the IC is checked not only on entry into Quick start state 36", but is rechecked during the period of the lamp is being driven out of the higher Quick start current. Thus, compared to the state diagram of the embodiment depicted in figure 4a, the embodiment depicted in figure 5 has a link 55 which results from the condition "end quick start time" not being met, which differs from the link 45 of the embodiment depicted in figure 4a, in that it re-directs control to the test Tic < QSth 41, rather than directly to the Pqs (>Pnom) state 42. The frequency at which the lamp moves from the higher current driven state 42, to the test 43 and potentially to the temperature test 41, may be set to a convenient value, such as, without limitation, once every second, once every 10 seconds or once every minute; in other words, the test 43 as to whether the IC temperature exceeds the first threshold, is regularly repeated, in this example, every second, 10 seconds or minute. Thus, this mechanism effectively terminates the quick start as soon as the condition "Tic< QSth" is no longer met. As in the previous embodiment, the CFL exits the modified Quick start state 36", even if the condition of the temperature test 41 has not been met, after the predetermined time, via "end quick start time" being met.

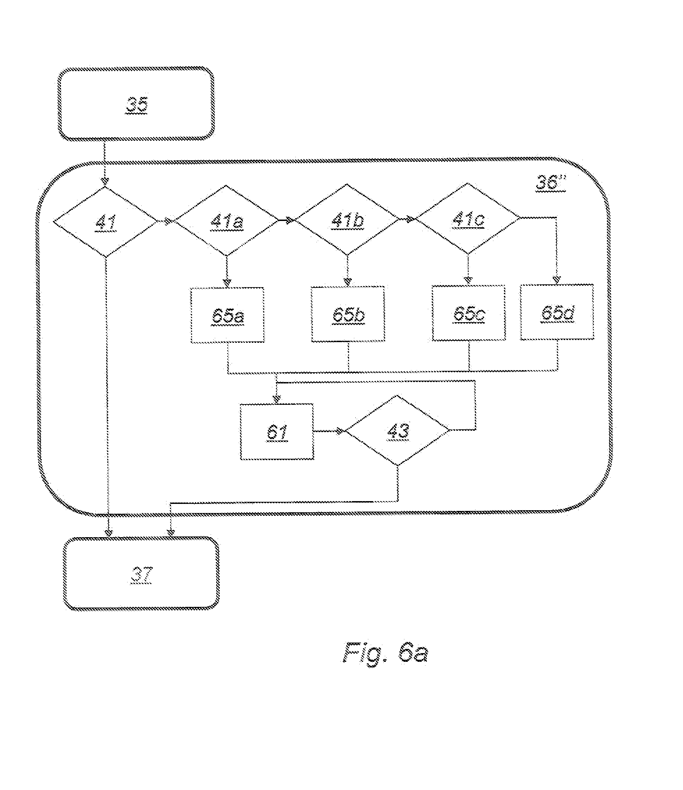

A fourth embodiment of the invention is depicted by the partial state diagram shown in figure 6a. Similar to the embodiments depicted in figure 4a, when the system is in, or is about to enter, the QUICK START state 36", a test is made a temperature condition. Thus, upon entering the modified QUICK START state 36", or just prior to entering this state, from the IGNITION state 35, the system checks for condition Tic < QSth3, at 41. The condition Tic < QSth3 corresponds to the temperature of the IC been less than a threshold value QSth3. If the condition is not met, then the temperature of the IC is sufficiently high that the QUICK START state is not required, and the state machine removes directly to the BURN state 37. However, if the condition that the IC temperature is lower than the threshold temperature QSth3 is met, then the CFL moves to a Quick start state with a lamp power or current which is dependent on the temperature of the IC. This is effected by testing whether the IC temperature is higher than one or more of a decreasing series of threshold temperatures, and setting a corresponding power for the Quick start mode, the power being higher for lower IC temperatures.

Thus, if the condition Tic < QSth3 is met, the IC temperature is tested against the condition Tic < QSth2 at 41 a. If this condition is *not* met, that is to say, if the IC temperature lies between QSth2 and QSth3; that is, QSth2< Tic =< QSth3, then the Quick start mode is established at a Quick start power Pqs3, shown at 65a in Figure 6a. However, if the condition Tic < QSth2 is met, then the IC temperature is tested against the condition Tic < QSth1 (where QSth1 is less than QSth2), shown at 41 b. If this further condition Tic < QSth1 is not met, then in the Quick Start mode is established with a Quick Start power of Pqs2 (where Pqs2>Pqs3), shown at 65b. Thus, if the IC temperature is in the range QSth1 < Tic =< QSth2, then the Quick start power is set to Pqs2. Correspondingly, if the further condition Tic < QSth1 is met, and then the IC temperature is tested against the yet further condition Tic < QSth0, shown at 41 c. The result of this test is that the Quick start power is set to Pqs1, shown at 65c, if QSth0< Tic =< QSth1; however, if Tic < QSth0, then the Quick start power is established at the highest power, Pqs0, shown at 65d in figure 6a.

The lamp is then driven (at 61) at the higher Quick start power appropriate to be temperature of the IC, for a fixed time. The time for which the lamp is driven at the Quick start power, that is the time the CFL remains in the QUICK START state 66, may be either preset *a priori*, or may depend on which of the Quick start power levels Pqs3, qs2, etc, is used. In a similar fashion to the previous embodiments, the condition "end quick start time" is repeatedly tested at 43, with control remaining at 61 with the lamp being driver with some Pqs (> Pnom); whereas at the end of the Quick start time, the CFL transfers to the BURN state 37.

In this embodiment of the IC temperature is compared with up to four threshold temperatures (QSth0 to QSth3). However, it will be immediately apparent to the skilled person, that the invention may be implemented using fewer or more than four temperatures.

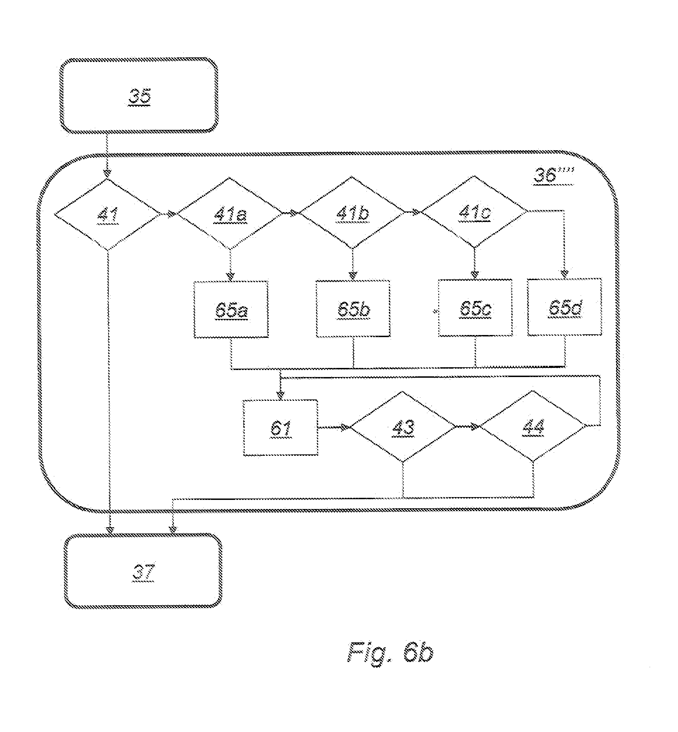

A fifth embodiment of the present invention is illustrated in Figure 6b. The embodiment depicted in figure 6b is generally similar to that shown in figure 6a; however in this embodiment, the temperature of the IC is checked not only on entry into Quick start state 36'" by test 41, but is periodically rechecked at 44 during the period of the lamp is being driven by the higher Quick start current, in a similar way to that described above with reference to Figure 4b. Thus, compared to the state diagram of the embodiment depicted in figure 6a, the embodiment depicted in figure 6b tests an the additional condition Tic < QSth_stop, shown at 44. If this condition is met, the quick start is ended and the state machine moves to the BURN state 37, whereas if the condition is not met, control remains at 61, with a Pqs (> Pnom). This additional threshold (QSth_stop) is higher than the other threshold levels

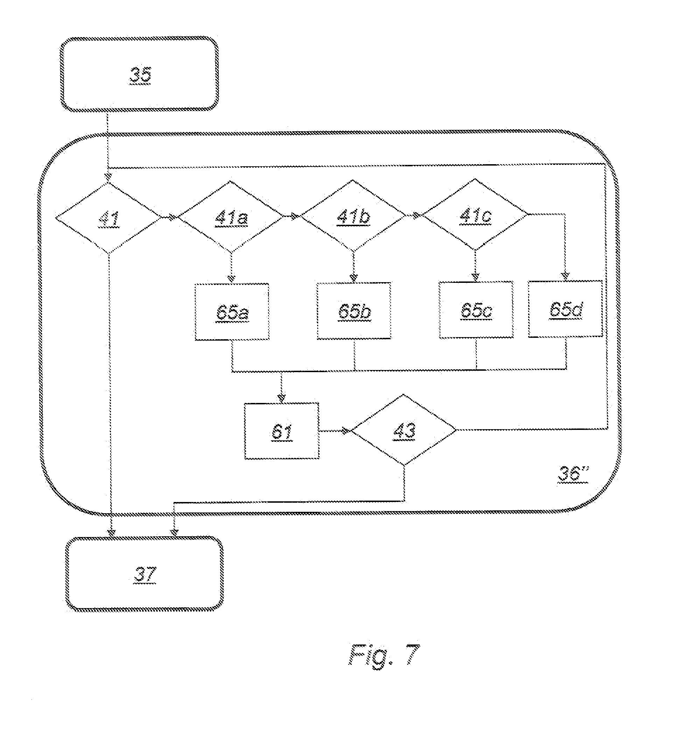

Figure 7 depicts a sixth embodiment of the invention, which incorporates the advantages of both the previously described two embodiments previously described with reference to Figures 5 and 6a. Thus this embodiment is similar to that depicted in figure 6a, in that, upon entering or just before entering the QUICK START state 66', from the IGNITION state 35, the IC temperature is compared to a first temperature threshold QSth3. If the result of this comparison is that the IC temperature is sufficiently low (that is, if Tic<QSth3), that the CFL would benefit from quick start, then the IC temperature is compared sequentially with a series of threshold temperatures QSth2, QSth1..., until the IC temperature range is found. The appropriate quick start power is then set (65a... 65d), according to the temperature range of the IC, which is determined by comparing the indicative temperature with a series of thresholds QSth1...QSth4), in tests 41, 41a...41c. Furthermore, similar to the method depicted in figure 5, whilst the CFL is in the quick start mode being driven with the appropriate quick start power, at 61', the condition "end of quick start" is regularly tested. If the condition is met, then the CFL transfers to the BURN state 37. If the condition is *not* met then, then the testing of the IC temperature against the threshold temperatures recommences. Thus control moves via the link to testing for the condition Tic < QSth3. If this condition is not met, then control moves directly to the Burn state 37. However, if the condition is met, then the series of tests against difference threshold temperatures, in order to determine the appropriate power level for the quick start mode, is repeated. The frequency with which the CFL is tested against the condition "end quick start time", is a matter of straightforward design choice, and may be, without limitation, once every second, once every 10 seconds or once every minute.

Since, in this embodiment, the IC temperature range may be established more than once, the power level set during different periods of the operation in QUICK START state may be different. Thus the boost to the lamp power can be sequentially ramped down during the QUICK START state, until the CFL reaches the BURN state 37. This may be advantageous, to reduce stress on components and to create a visually more gradual transition from quick start to normal operation.

The approaches shown in figures 5 and 7 can in principal work without any upper limit to the duration quick start period. However, if, for instance, used in a low temperature environment, the quick start stop condition might not ever be met. Therefore, for all the embodiments described above, preferably a maximum time during which the CFL can be in the quick start state should be defined, in order to the limit the time during which components of the lamp could be used outside of their intended and normal operating conditions.

An advantage shared by all the embodiments above, is that of the inclusion of a temperature sensor either in the IC itself or elsewhere in the lamp housing. Since lighting applications do not normally include over-temperature cut-off, conventionally a temperature sensor is not included in the light housing. However, as embodiments of the invention include a temperature sensor for the quick start operation, the same temperature sensor may be used in the overtemperature conditions to dim the lamp, or even in extreme circumstances to shut down the lamp. This is particularly useful for lamps which have a quick start mode -- a field of application of the invention -- since in such a mode the power supply to the lamp is higher than would normally be the case, and thus there may be considered to be a greater risk of overhearing and thermally-induced damage.

In preferred embodiments of the invention, the controller is configured such that the duration of the QUICK-START mode, that is to say, the time during which, absent alteration of the QUICK-START duration due to under- or over- temperature conditions, the state machine is in the QUICK-START state is detemined by means of external components. Similarly, the level of the boost during of the QUICK-START mode, that is to say, the power level, absent alteration of the QUICK-START power level due to under- or over- temperature conditions, the state machine is in the QUICK-START state is also determined by means of external components. The external components may be resistors and capacitors.

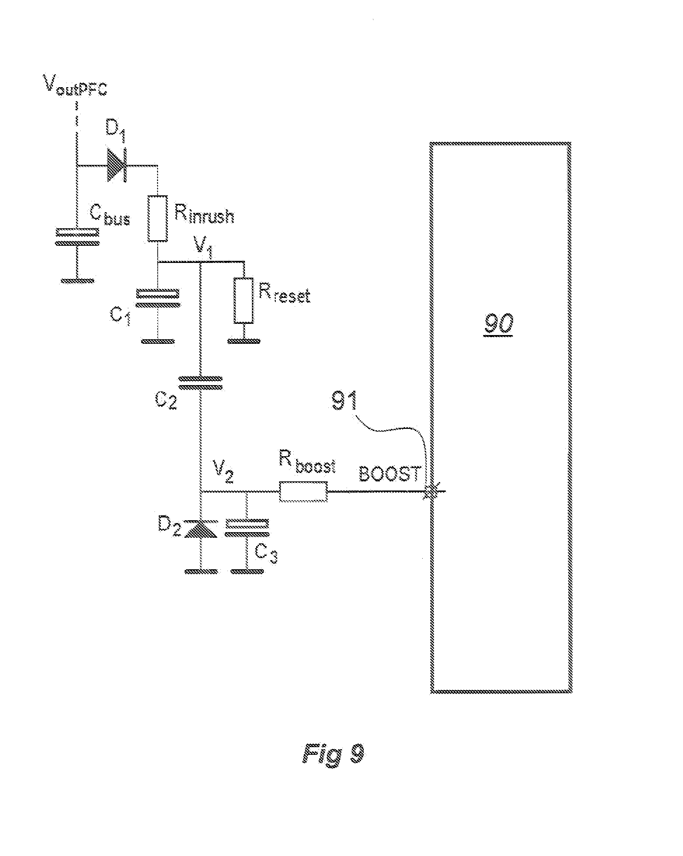

Figure 9 shows a schematic of part of a controller, with a network of capacitors and resistors. Controller 90 has a "boost" connection pin 91, the input current in the boost pin is proportional to the increase of the lamp current. Resistor Rboost is connected between the pin 91 and ground, via a diode D2; To node V2 between Rboost and diode D2 is connected a first terminal of a second capacitor C2, the other terminal of which is connected to ground via a parallel arrangement of a resistor Rreset and a further capacitor C1. To node V1 between capacitor C2 and reset resistor Rreset is connected a further resistor Rinrush, the other terminal of which is grounded via a blocking diode D1 and further capacitor Cbus. Cbus and D1 are indirectly connected to the output of a PFC stage (at voltage VoutPFC) or directly to the rectified mains voltage.

The resistor Rboost determines the boost current. The duration of the boost period is determined by the time constant C3Rboost. The time constant C1 Rreset determines the cooling down time constant and influences the boost at switching on of the lamp shortly after switching off of the lamp.

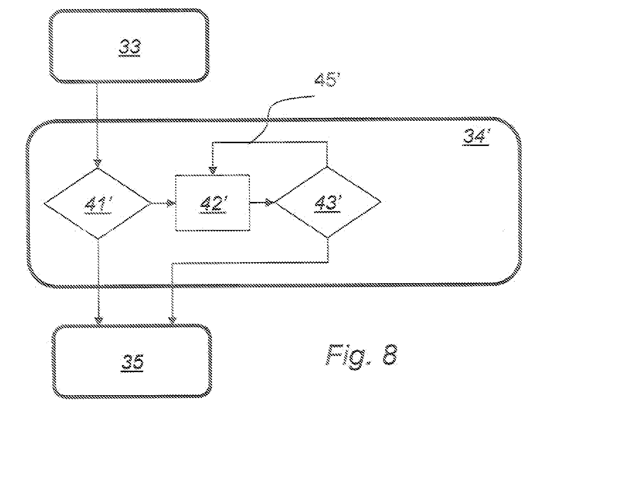

The above embodiments have been described in relation to a QUICK START state such as that to shown at 36 in figure 3. However, as will now be described, the invention also embraces embodiments which affect a PREHEAT state such as that shown at 33 in figure 3. An example such embodiment is shown in figure 8.

Energy saving lamps are already known, and commercially available, both with and without preheat. Preheating improves lifetime significantly and can enable usage of the lamp outdoors. In a typical lamp, preheating takes about 1 second, and delays lamp ignition by the same amount. So without preheat, the lamp ignites much faster, giving the end-user light immediately. In some applications, such as in a cellar or a closet, this is very advantageous, since the end user may need light for orientation immediately. However, lamps without preheating cannot generally be used outside, especially when using it in cold periods, or the lamp lifetime will be reduced significantly.

The conflicting requirements for indoor and outdoor lamps may create confusion, and the end user may difficulty selecting the correct type of lamp for outdoor usage.

According to the prior art, if the lamp is equipped with preheating, this is always performed, every time the lamp is turned on. In contrast, according to an aspect of the invention, by checking the lamp temperature, the lamp can adjust the preheat time accordingly and optionally even skip the preheat altogether. Advantageously, by thus not overheating the electrodes, the lamp lifetime may be increased. Moreover, for rapid re-enabling of lamp such as when the lamp has just been switched off and then immediately switched back on, preheating can be skipped, giving light immediately. Further, a single lamp may be suitable for both outdoors as well as indoors, as the preheat duration may be automatically adjusted according to ambient temperature, thereby avoiding the above confusion

With reference to figure 8, and analogous to the control method described above with reference to figure 4a, upon entering a modified PREHEAT state 34', or just prior to entering this state from the STARTUP state 33, the system checks for a condition at 41'. In this case the condition is Tic < PHth. Here, Tic is the temperature of the integrated circuit embodying the state machine, and PHth corresponds to a predetermined threshold temperature. If the condition is met, then the control initiates the filament preheat procedure, where a preheat current is driven through the filaments. This preheat current is applied to the filaments for a pre-determined period, by repeated testing for the condition "end preheat time" at 43'. All the while the condition is not met, the control returns to 42'; once the condition "end preheat time" is met, then the CFL moves to the IGNITION state 35. If, however, the condition Tic < PHth is not met at test 41', that is to say, if Tic is equal to or higher than the threshold temperature, then the state machine bypasses the modified PREHEAT state 34', and moves straight to the IGNITION state 35.

In the same way that the embodiment just described with reference to figure 8 may be considered to be an analogue of that described above with reference to figure 4a, but affecting the PREHEAT state 34 rather than the QUICK START state 36, the invention embraces further embodiments which are analogues of the embodiments described above with reference to figures 4b through 7 inclusive, *mutatis mutandis*. In particular in an embodiment of the invention which is the analog of that described above with reference to figure 6, the multiple threshold temperatures QSth0 to QSth3 are substituted by multiple threshold temperatures PHth0 to PHth3, and the quick start powers Pqs0 to Pqs3 which are set as a result of the temperature being in the respective temperature range are substituted by preheat currents Iph0 to Iph3 respectively,

The above examples have been discussed with respect to controlling the lamp power during pre-heat, but from the above discussion, it will be immediately apparent that the invention applies similarly to control of the duration of (or, in extremis, the absence of) the pre-heat state

It will be immediately apparent to the skilled person from reading the above description, that a method of controlling a compact fluorescent lamp is disclosed, which method is capable of implementing, adjustment or omitting a high-power start-up mode. The control is dependent on a sensor, which senses a temperature indicative of the temperature of the lamp, which sensor may preferably be integral with a controller and implemented in an integrated circuit. The adjustment may comprise changes to the current during a high-power start-up mode, or changes to duration of the mode. A single adjustment of multiple adjustments may be made. A control system operable according to such a method is also disclosed.

From reading the present disclosure, other variations and modifications will be apparent to the skilled person. Such variations and modifications may involve equivalent and other features which are already known in the art of fluorescent lamps and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A method of controlling a fluorescent lamp operable in at least a start-up mode and a normal operating mode, the start-up mode having a start-up power, and the normal operating mode having a normal operating power,
comprising
sensing an indicative temperature which is indicative of the temperature of the compact fluorescent lamp by means of a sensor, and
controlling the start-up mode in dependence on the indicative temperature by means of a controller.

2. The method of claim 1, wherein the start-up mode comprises a quick-start mode such that the start-up power is larger than the normal operating power.

3. The method of claim 1, wherein the start-up mode comprises a pre-heat mode such that the compact fluorescent lamp is not ignited.

4. The method of claim 2 or 3, wherein the sensor is integral with the controller.

5. The method of any of claims 2 to 4, wherein the indicative temperature is sensed before the compact fluorescent lamp enters the start-up mode, and the step of controlling the start-up mode comprises bypassing the start-up mode if the indicative temperature exceeds a first threshold temperature.

6. The method of claim 5, wherein the step of controlling the start-up mode comprises terminating the start-up mode if the indicative temperature exceeds a stop threshold temperature which is higher than the first threshold temperature.

7. The method of any of claims 2 to 4, wherein the indicative temperature is sensed whilst the compact fluorescent lamp is in the start-up mode, and the step of controlling the start-up mode comprises terminating the start-up mode if the indicative temperature exceeds a first threshold temperature.

8. The method of claim 5, 6 or 7, wherein the step of controlling the start-up mode further comprises adjusting the start-up power in dependence on the indicative temperature if the indicative temperature does not exceed the first threshold temperature.

9. The method of claim 8 wherein the start-up power is adjusted by controlling the current through the lamp.

10. The method of claim 8 wherein the start-up power is adjusted by setting the operating frequency of the lamp.

11. The method of claim 8, 9 or 10, wherein the step of controlling the start-up power comprises setting the start-up power to a first power level if the indicative temperature does not exceed a second threshold temperature and setting the start-up power to a second power level if the indicative temperature exceeds the second threshold temperature and does not exceed a third.

12. The method of any preceding claim, wherein the step of controlling the start-up mode comprises terminating the start-up mode if the compact fluorescent lamp is in the start-up mode at the end of a pre-determined maximum start-up duration.

13. The method of claim 3, wherein the step of controlling the start-up mode comprises adjusting the duration of the start-up mode in dependence on the indicative temperature.

14. The method of any preceding claim, wherein the compact fluorescent lamp is an integrated compact fluorescent lamp,

15. A control system for a fluorescent lamp operable in a start-up mode and a normal operating mode, the start-up mode having a start-up power and the normal operating mode having a normal operating power,
comprising
a sensor for sensing an indicative temperature in dependence on the temperature of the compact fluorescent lamp and a controller adapted to control the start-up mode in dependence on the indicative temperature.

16. A control system according to claim 15, wherein the sensor is integral with the controller.

17. A control system according to claim 15 or 16, wherein the controller comprises a boost connection 91, and is configured to receive information determinative of both the start-up power and a duration of the start-up mode via the boost connection.

18. A control system according to claim 17, wherein the controller is configured such that, in use, the information is provided by means of a network of one or more resistors and one or more capacitors connected to the boost connection.

19. A control system according to claim 18, wherein the network comprises a resistor for determining the start-up power and a capacitor such that the duration of the start-up mode is determined by means of a time constant associated with the resistor and the capacitor.

20. A control system according to claim 15 or 16, configured to sense the indicative temperature before the compact fluorescent lamp enters the start-up mode and wherein the controller is configured to bypass the start-up mode if the indicative temperature exceeds a first threshold temperature.

21. A control system according to claim 20, configured to sense the indicative temperature whilst the compact fluorescent lamp is in the start-up mode and wherein the controller is configured to terminate the start-up mode if the indicative temperature exceeds a stop threshold temperature.

22. A control system according to claim 15 or 16 configured to sense the indicative temperature whilst the compact fluorescent lamp is in the start-up mode and the controller is configured to terminate the start-up mode if the indicative temperature exceeds a first threshold temperature.

23. A control system according to claim 20, 21 or 22, wherein the controller is further configured to control the start-up power in dependence on the indicative temperature if the indicative temperature does not exceed the first threshold temperature.

24. A control system according to claim 23 configured to control the current through the lamp.

25. A control system according to claim 23, configured to control the operating frequency of the lamp.

26. A control system according to claim 23, 24 or 25, wherein the controller is further configured to set the start-up current to a first current level if the indicative temperature does not exceed a second threshold temperature and to set the start-up current to a second current level if the indicative temperature exceeds the second threshold temperature and does not exceed a third.

27. An integrated circuit comprising a control system according to any of claims 15 to 26.
